# EUROPEAN PATENT APPLICATION

(11) **EP 4 670 583 A2**
(43) Date of publication of application: **31.12.2025**
(21) Application number: 25184796.8
(22) Date of filing: 24.06.2025
(51) Int. Cl.: A47J 31/46, A47J 31/36, F16K 15/14, F16K 47/02, F16K 23/00

(54) **ON-OFF VALVE AND LIQUID SUPPLY PATH SYSTEM**

(30) Priority: 28.06.2024 CN 202410864945
(71) Applicant: Kalerm Technology (Suzhou) Co., Ltd, Suzhou Jiangsu 215134 (CN)
(72) Inventor: YU, Ningchao, Suzhou, Jiangsu 215134 (CN); GUO, Zhen, Suzhou, Jiangsu 215134 (CN)
(74) Representative: Winter, Brandl - Partnerschaft mbB

(57) **Abstract**

The present application provides an on-off valve (20) and a liquid supply path system. The on-off valve includes: a valve housing (21) defining a receiving cavity (213), the valve housing (21) having a liquid inlet passage (211) and a liquid outlet passage (212), wherein both the liquid inlet passage (211) and the liquid outlet passage (212) communicate with the receiving cavity (213); a sealing member (22) provided in the receiving cavity (213), wherein a buffer chamber (223) is formed between the sealing member (22) and the liquid outlet passage (212); a buffer member (23) provided between the liquid inlet passage (211) and the sealing member (22); wherein in an initial state, the buffer member (23) abuts against the sealing member (22) to block communication between the liquid inlet passage (211) and the liquid outlet passage (212); under action of negative pressure in the buffer chamber (223), a gap is formed between the sealing member (22) and the buffer member (23), and the liquid inlet passage (211) and the liquid outlet passage (212) communicate through the gap. The on-off valve opens based on negative pressure at the liquid outlet passage side, requiring no additional circuit control, providing reliable control and very low overall cost.

## Description

### TECHNICAL FIELD

The present application relates to the field of beverage apparatus, particularly to an on-off valve and a liquid supply path system.

### BACKGROUND

Beverage devices such as water dispensers, coffee machines, and tea machines all have water supply systems. The water supply system may have multiple outlets for outputting different types of liquids, such as cold water, hot water, coffee liquid, and flavor-adjusting liquids.

The water supply system is provided with a pressurized liquid source. Additionally, to ensure liquid output to specific lines, a pump is provided downstream of the pressurized liquid source. During operation of the pressurized liquid source, when the water source pressure changes, it causes pressure variations in the water path, resulting in water hammer effects. The pump downstream of the pressurized liquid source is affected by occurrence of the water hammer, causing dripping at the outlet connected to the pump.

Dripping not only creates a cleaning burden for users but also affects user experience. For example, during the process of accessing hot water from the hot water outlet, undesired liquid flow occurs at another outlet, greatly affecting the user experience of the beverage machine and may even lead to customer complaints and doubts about the machine's performance.

### SUMMARY

The present application provides an on-off valve and a liquid supply path system. The various aspects and advantages of the present application will be elaborated in the following description, or will be apparent from the description, or can be understood through the implementation of the present application.

The object of the present invention is to provide an on-off valve with low cost, reliable control, and prevention of undesired liquid flow at outlets.

Another object of the present invention is to provide a liquid supply path system with low cost and reliable operation.

In an exemplary aspect of the present application, an on-off valve is provided. The on-off valve includes:
a valve housing defining a receiving cavity, the valve housing having a liquid inlet passage and a liquid outlet passage, wherein both the liquid inlet passage and the liquid outlet passage communicate with the receiving cavity;
a sealing member provided in the receiving cavity, wherein a buffer chamber is formed between the sealing member and the liquid outlet passage;
a buffer member provided between the liquid inlet passage and the sealing member;
wherein in an initial state, the buffer member abuts against the sealing member to block communication between the liquid inlet passage and the liquid outlet passage; under action of negative pressure in the buffer chamber, a gap is formed between the sealing member and the buffer member, and the liquid inlet passage and the liquid outlet passage communicate through the gap.

In another exemplary aspect of the present application, a liquid supply path system is provided. The liquid supply path system includes:
a pressurized liquid source;
a liquid supply line connected downstream of the pressurized liquid source;
a first output line connected downstream of the liquid supply line or delivering liquid to a first outlet port;
a second output line connected downstream of the liquid supply line for delivering liquid to a second outlet port, wherein a pump is provided on the second output line;
wherein the liquid supply path system further comprises the on-off valve as described in the above embodiment, the second output line and the first output line have an output connection point, and the on-off valve is provided between the output connection point and the second output line;
the pump is configured to generate a negative pressure in the buffer chamber when activated, thereby forming the gap between the sealing member and the buffer member such that the liquid supply line and the second output line communicate through the gap; the pump is further configured such that, when deactivated, the buffer member abuts against the sealing member to block communication between the liquid supply line and the second output line.

Compared with the prior art, in embodiments of the present application, when the pump is deactivated, the liquid supply line can deliver liquid to the first output line through the output connection point, and since the on-off valve is closed, the liquid supply line cannot deliver liquid to the second output line, thus avoiding undesired liquid discharge at the second outlet port. When the pump is activated, the on-off valve opens under the action of negative pressure, allowing the liquid supply line to deliver liquid to the second output line through the output connection point. The opening and closing of the on-off valve do not require additional circuit control, only needing to be connected in series upstream of the second output line, which can eliminate the effect of water hammer on the second output line. Additionally, the small size of the on-off valve does not increase the overall volume of the water line, facilitating the miniaturization of machines equipped with this liquid supply line system.

### BRIEF DESCRIPTION OF THE DRAWINGS

Fig. 1 is a schematic view of an on-off valve according to an embodiment of the present application, wherein the on-off valve is in a disconnected state.
Fig. 2 is a schematic view of an on-off valve according to an embodiment of the present application, wherein the on-off valve is in a connected state.
Fig. 3 is an exploded view of the on-off valve shown in Fig. 1.
Fig. 4 is a perspective view of the first housing of the on-off valve shown in Fig. 1.
Fig. 5 is a perspective view of the sealing member of the on-off valve shown in Fig. 1.
Fig. 6 is a schematic view of an on-off valve according to another embodiment of the present application.
Fig. 7 is a perspective view of the sealing member of the on-off valve shown in Fig. 6.
Fig. 8 is a schematic view of an embodiment of the liquid supply path system of the present application.
Fig. 9 is an enlarged view of the portion enclosed by the dashed line in Fig. 8.
Fig. 10 is a schematic view showing fluid flow direction in the liquid supply path system of Fig. 8 during beverage brewing.
Fig. 11 is a schematic view showing fluid flow direction in the liquid supply path system of Fig. 8 during milk foaming.
Fig. 12 is a schematic view showing fluid flow direction in the liquid supply path system of Fig. 8 during cleaning.
Fig. 13 is a schematic view showing fluid flow direction in the liquid supply path system of Fig. 8 during hot water supply.
Fig. 14 is a schematic view of another embodiment of the liquid supply path system of the present application.
Fig. 15 is a schematic view of yet another embodiment of the liquid supply path system of the present application.
Fig. 16 is a schematic view of still another embodiment of the liquid supply path system of the present application.
Fig. 17 is a schematic view of a further embodiment of the liquid supply path system of the present application.

Reference numerals are repeatedly used in this specification and drawings to indicate identical or similar features or elements of the present application.

### DETAILED DESCRIPTION

The following detailed description of the present application will be made with reference to the specific embodiments shown in the drawings. However, these embodiments do not limit the present application, and any structural, methodological, or functional modifications made by those skilled in the art based on these embodiments are included within the scope of protection of the present application.

It should be understood that spatial relative position terms such as "upper," "lower," "outer," "inner," etc., used herein are for the purpose of convenient description to describe the relationship between one unit or feature relative to another unit or feature as shown in the drawings. The spatial relative position terms are intended to encompass different orientations of the device in use or operation in addition to the orientations depicted in the drawings.

As used herein, the terms "first," "second," and "third" may be used interchangeably to distinguish one component from another, and these terms are not intended to indicate the position or importance of the respective components. The terms "upstream" and "downstream" refer to the relative direction with respect to fluid flow in a fluid passage. For example, "upstream" refers to the direction from which fluid flows, while "downstream" refers to the direction toward which fluid flows.

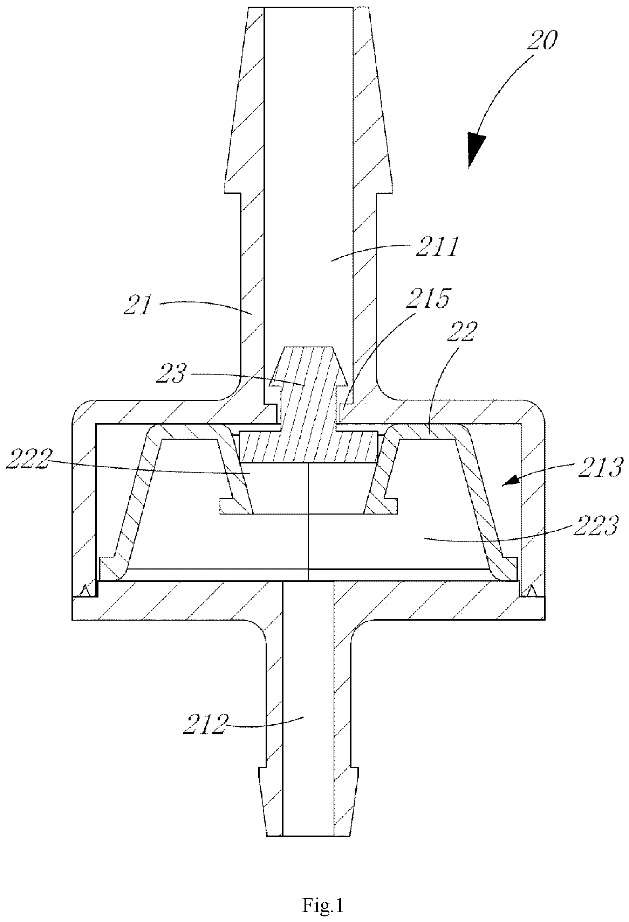

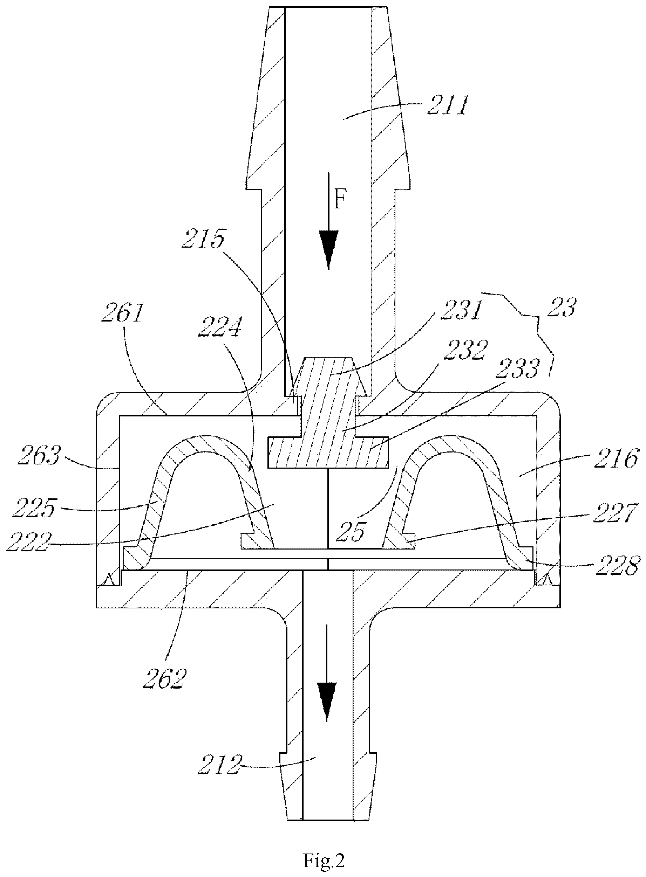

Referring to Figs. 1 and 2, an embodiment of the present application provides an on-off valve 20. The on-off valve 20 includes a valve housing 21, a sealing member 22, and a buffer member 23, both the sealing member 22 and buffer member 23 being provided within the valve housing 21. The valve housing 21 defines a receiving cavity 213 and has a liquid inlet passage 211 and a liquid outlet passage 212, both of the liquid inlet passage 211 and the liquid outlet passage 212 communicate with the receiving cavity 213. The liquid inlet passage 211 and liquid outlet passage 212 are respectively configured to connect to upstream and downstream lines of the on-off valve 20, which can restrict or allow water supply from the upstream line to the downstream line.

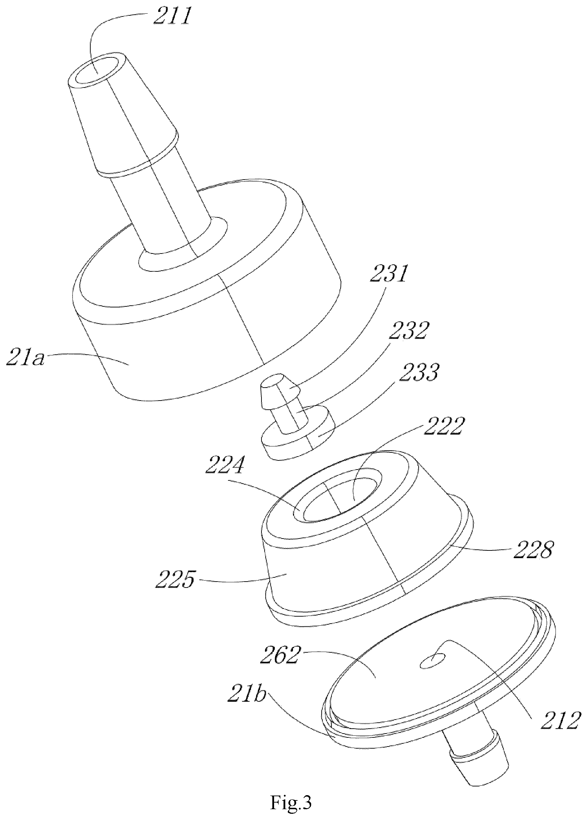

As shown in Fig. 3, the valve housing 21 includes a first housing 21a and a second housing 21b, which are sealingly connected to form the receiving cavity 213. The liquid inlet passage 211 is provided on the first housing 21a, and the liquid outlet passage 212 is provided on the second housing 21b.

The sealing member 22 is disposed in the receiving cavity 213, forming a buffer chamber 223 between the sealing member 22 and the liquid outlet passage 212. The buffer member 23 is positioned between the liquid inlet passage 211 and the sealing member 22.

Referring to Fig. 1, in an initial state, the buffer member 23 abuts against the sealing member 22 to block fluid communication between the liquid inlet passage 211 and the liquid outlet passage 212. Referring to Fig. 2, under the action of negative pressure in the buffer chamber 223, a gap 25 is formed between the sealing member 22 and the buffer member 23, allowing communication between the liquid inlet passage 211 and the liquid outlet passage 212 through this gap 25. Here, the initial state can be a state where no negative pressure exists in the buffer chamber 223, namely, a state where communication between the liquid inlet passage 211 and the liquid outlet passage 212 is blocked due to the abutment between the buffer member 23 and the sealing member 22.

The buffer chamber 223 communicates with the liquid outlet passage 212, and the negative pressure source at the liquid outlet passage 212 side can generate negative pressure in the buffer chamber 223. Communication between the liquid inlet passage 211 and the liquid outlet passage 212 is only possible when negative pressure exists in the buffer chamber 223. When there is no negative pressure in the buffer chamber 223, even if water hammer impacts occur at the liquid inlet passage 211, this will only cause the buffer member 23 to press more tightly against the sealing member 22, preventing water passage and thus avoiding undesired overflow at the outlet downstream of the liquid outlet passage 212.

The on-off valve 20 requires no additional circuit control, resulting in very low overall cost. Moreover, the volume of the on-off valve 20 is extremely small, roughly equivalent to the size of a connector in the water path, and does not occupy machine space. It can be connected in series in the water path, directly reducing or eliminating the impact of water hammer effects on downstream water paths.

In some embodiments, the sealing member 22 is configured to undergo self-deformation under negative pressure to form the gap 25 between the sealing member 22 and the buffer member 23. The sealing member 22 can be constructed as a soft rubber component, such as food-grade silicone or rubber components, featuring simple structure and low cost.

For example, when the sealing member 22 has not deformed, it abuts against the buffer member 23 to block fluid communication between the liquid inlet passage 211 and the liquid outlet passage 212, thereby blocking fluid communication between the upstream and downstream lines of the on-off valve 20. When the sealing member 22 undergoes self-deformation, the gap 25 forms between the sealing member 22 and the buffer member 23, allowing fluid communication between the liquid inlet passage 211 and the liquid outlet passage 212 through the gap 25, thereby establishing fluid communication between the upstream and downstream lines of the on-off valve 20.

Another way to form the gap 25 between the sealing member 22 and the buffer member 23 is that under the action of the negative pressure in the buffer chamber 223, at least a portion of the sealing member 22 is displaced toward the liquid outlet passage 212. For instance, the sealing member 22 may also be displaced as a whole under negative pressure to overcome an elastic force to form the gap 25 with the buffer member 23. In other feasible solutions, a portion of the sealing member 22 displaces under negative pressure to form the gap 25 with the buffer member 23.

In some embodiments, at least a portion of the buffer member 23 is disposed in the receiving cavity 213, the sealing member 22 has a connecting passage 222, the buffer member 23 extends into the connecting passage 222, and the wall of the connecting passage 222 either abuts against the buffer member 23 or forms the gap 25 with the buffer member 23. The cooperation between the buffer member 23 and the wall of the connecting passage 222 to block or allow fluid communication between the liquid inlet passage 211 and the liquid outlet passage 212 ensures more reliable connection and blockage of the on-off valve 20.

For example, when the wall of the connecting passage 222 abuts against the buffer member 23, the connecting passage 222 is blocked, thereby blocking fluid communication between the liquid inlet passage 211 and the liquid outlet passage 212; when the gap 25 forms between the wall of the connecting passage 222 and the buffer member 23, fluid communication between the liquid inlet passage 211 and the liquid outlet passage 212 is established through the connecting passage 222.

Along the fluid flow direction from the liquid inlet passage 211 to the liquid outlet passage 212 (as shown by arrow F in Fig. 2), the buffer member 23 is movably connected to the valve housing 21, and the connecting passage 222 is tapered. When there is no negative pressure in the buffer chamber 223 and water hammer impacts occur at the liquid inlet passage 211, the buffer member 23 moves toward the liquid outlet passage 212 under water pressure. Due to the tapering of the connecting passage 222, the cross-sectional area of the connecting passage 222 decreases along the fluid flow direction, causing the buffer member 23 to press more tightly against the wall of the connecting passage 222, further ensuring that water from the liquid inlet passage 211 cannot enter the liquid outlet passage 212. Therefore, the downstream line of the liquid outlet passage 212 is not affected, and undesired liquid discharge, such as water or milk dripping, will not occur at the outlet downstream of the liquid outlet passage 212.

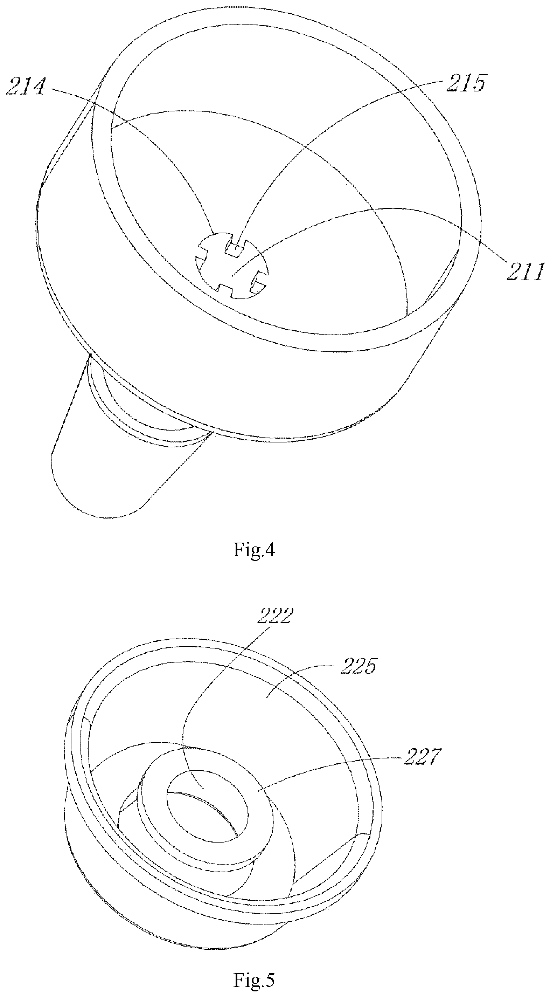

Referring to Figs. 3 and 4, a first limiting portion 215 is provided in the liquid inlet passage 211, and the buffer member 23 includes a second limiting portion 231 and a passage blocking portion 233. Along the fluid flow direction, the second limiting portion 231 and the passage blocking portion 233 are disposed on opposite sides of the first limiting portion 215. The second limiting portion 231 extends into the liquid inlet passage 211, while the passage blocking portion 233 is located in the receiving cavity 213 and can abut against the sealing member 22. There is a preset distance between the second limiting portion 231 and the first limiting portion 215, allowing the buffer member 23 to move within this preset distance, and along the fluid flow direction, the second limiting portion 231 can abut against the first limiting portion 215. The first limiting portion 215 restricts the movement range of the buffer member 23, preventing excessive abutment between the buffer member 23 and the sealing member 22 that might make separation difficult, and when the sealing member 22 resets, it can also drive the buffer member 23 to move, ensuring proper sealing between the buffer member 23 and the connecting passage 222 under water pressure next time.

The liquid inlet passage 211 has a water inlet 214 communicating with the receiving cavity 213. The first limiting portion 215 is provided at the water inlet 214 and is configured as multiple protrusions spaced circumferentially around the water inlet 214. The second limiting portion 231 is roughly configured in a truncated cone or conical shape and can abut against the multiple protrusions to limit the movement range of the buffer member 23 toward the water outlet passage 212. Gaps exist between adjacent protrusions; water flow can be guided along the peripheral surface of the second limiting portion 231 to the gaps between the multiple protrusions, then flow into the connecting passage 222 through these gaps.

The passage blocking portion 233 can be configured as a circular plate. The buffer member 23 includes a connecting rod 232 connecting the second limiting portion 231 and the passage blocking portion 233. The diameter of the connecting rod 232 is smaller than the diameter of the truncated cone or cone base of the second limiting portion 231,and the diameter of the connecting rod 232 is also smaller than the diameter of the circular plate of the passage blocking portion 233. The connecting rod 232 passes through the water inlet 214, with the second limiting portion 231 being restricted by the first limiting portion 215, allowing the buffer member 23 to move toward or away from the liquid outlet passage 212, thus ensuring reliable operation and longer service life of the on-off valve 20.

Continuing to refer to Figs. 1 and 2, the valve housing 21 includes a first wall 261 adjacent to the liquid inlet passage 211, which defines the receiving cavity 213 and positionally constrains the sealing member 22. The sealing member 22 includes a bending portion 224 that extends bendingly from the first wall 261 toward the liquid outlet passage 212, and the bending portion 224 surrounds to form the connecting passage 222. The bendingly extending bending portion 224 forming the connecting passage 222 increases the contact area between the sealing member 22 and the fluid in the buffer chamber 223, making it easier for the sealing member 22 to undergo self-deformation under negative pressure.

The valve housing 21 also includes a second wall 262 adjacent to the liquid outlet passage 212, which defines the receiving cavity 213 and positionally constrains the sealing member 22. The sealing member 22 includes a surrounding wall portion 225 that surrounds the liquid outlet passage 212 and contacts against the second wall 262, with the surrounding wall portion 225 being integrally formed with the bending portion 224. The integrally formed surrounding wall portion 225 and bending portion 224 ensure overall sealing of the sealing member 22 and facilitate assembly in the receiving cavity 213.

In some embodiments, the sealing member 22 may include the following structure: a first bent edge 227 is provided at the end of the wall of the connecting passage 222 toward the liquid outlet passage 212, and the first bent edge 227 protrudes in a direction away from the connecting passage 222, that is, the first bent edge 227 protrudes toward the surrounding wall portion 225. Alternatively, it can be considered that the first bent edge 227 is provided at the end of the bending portion 224 toward the liquid outlet passage 212. The first bent edge 227 reduces the distance from the end of the bending portion 224 to the surrounding wall portion 225, facilitating deformation of the bending portion 224 under negative pressure, and also strengthening the structural strength of the end of the bending portion 224, extending the service life of the sealing member 22.

In other embodiments, the sealing member 22 may include the following structure: a second bent edge 228 is provided at the end of the sealing member 22 that engages with the second wall 262, that is, the second bent edge 228 is provided at the end of the surrounding wall portion 225 near the second wall 262, and the second bent edge 228 also protrudes in a direction away from the connecting passage 222, that is, the second bent edge 228 protrudes away from the bending portion 224. This increases the contact area between the sealing member 22 and the second wall 262, ensuring the sealing of the buffer chamber 223, and also strengthens the structural strength of the end of the surrounding wall portion 225, extending the service life of the sealing member 22.

Among them, the direction of negative pressure force acting on the sealing member 22 is the same as the fluid outflow direction of the liquid outlet passage 212, and the liquid inlet passage 211, connecting passage 222, and liquid outlet passage 212 are coaxially arranged. This arrangement ensures that when there is no negative pressure in the buffer chamber 223, the sealing member 22 and buffer member 23 can more easily close the gap 25 to disconnect the on-off valve 20; when negative pressure exists in the buffer chamber 223, the sealing member 22 and buffer member 23 can more easily open the gap 25 to connect the on-off valve 20. The coaxial arrangement of the liquid inlet passage 211, connecting passage 222, and liquid outlet passage 212 also facilitates manufacturing and assembly of the on-off valve 20.

In some embodiments, the valve housing 21 includes a first wall 261, a second wall 262, and a side wall 263 connecting the first wall 261 and the second wall 262. The first wall 261 is adjacent to the liquid inlet passage 211, the second wall 262 is adjacent to the liquid outlet passage 212, and the first wall 261, second wall 262, and side wall 263 together form the receiving cavity 213. A water receiving chamber 216 is formed among the sealing member 22, the side wall 263, and the first wall 261. When there is no negative pressure in the receiving cavity 213, the sealing member 22 abuts against the first wall 261 to block fluid communication between the water receiving chamber 216 and the liquid inlet passage 211; when negative pressure exists in the receiving cavity 213, the gap 25 forms between the sealing member 22 and the buffer member 23, and the sealing member 22 separates from the first wall 261 to allow communication between the water receiving chamber 216 and the liquid inlet passage 211. The cooperation between the sealing member 22 and the first wall 261 further ensures blockage between the liquid inlet passage 211 and the buffer chamber 223 when the on-off valve 20 is disconnected. Moreover, when the on-off valve 20 is connected, the water receiving chamber 216 fills with water, and the water pressure can assist in deforming the sealing member 22, ensuring the gap 25 opens. Additionally, the water receiving chamber 216 can keep the surrounding wall portion 225 separated from the side wall 263, preventing adhesion between them.

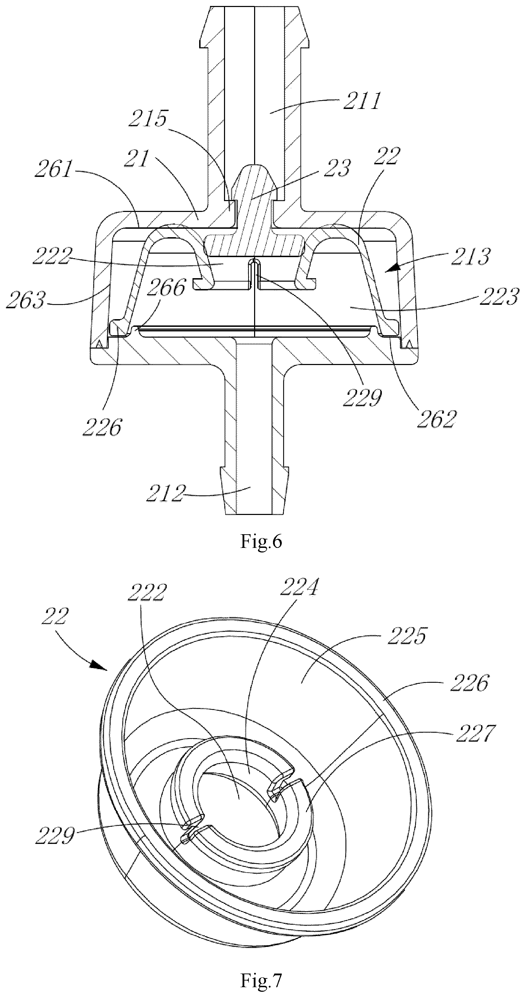

Referring to Figs. 6 and 7, in other embodiments, the valve housing 21 includes a first wall 261, a second wall 262, and a side wall 263 connecting the first wall 261 and the second wall 262. The first wall 261 is adjacent to the liquid inlet passage 211, the second wall 262 is adjacent to the liquid outlet passage 212, and the first wall 261, second wall 262, and side wall 263 together form the receiving cavity 213. A limiting protrusion ring 266 is provided on the second wall 262, and the sealing member 22 includes an edge 226 that abuts against the second wall 262, with the edge 226 being limited between the side wall 263 and the limiting protrusion ring 266. The side wall 263 can restrict outward expansion of the sealing member 22, while the limiting protrusion ring 266 on the second wall 262 can restrict inward contraction of the sealing member 22, thus limiting the surrounding wall portion 225 radially along the liquid outlet passage 212, making it easier for the bending portion 224 to deform under negative pressure to form the aforementioned gap 25. The edge 226 of the sealing member 22 can also provide the aforementioned second bent edge 228 to increase the contact area between the sealing member 22 and the second wall 262.

The sealing member 22 may include the following structure: at least one notch 229 is provided on the wall of the connecting passage 222, with the opening direction of the notch 229 set to face the liquid outlet passage 212. The notch 229 makes it easier for the bending portion 224 to undergo self-deformation under negative pressure. In some embodiments, there may be two, three, or more notches 229, evenly spaced on the wall of the connecting passage 222, allowing for more uniform deformation of the bending portion 224 under negative pressure.

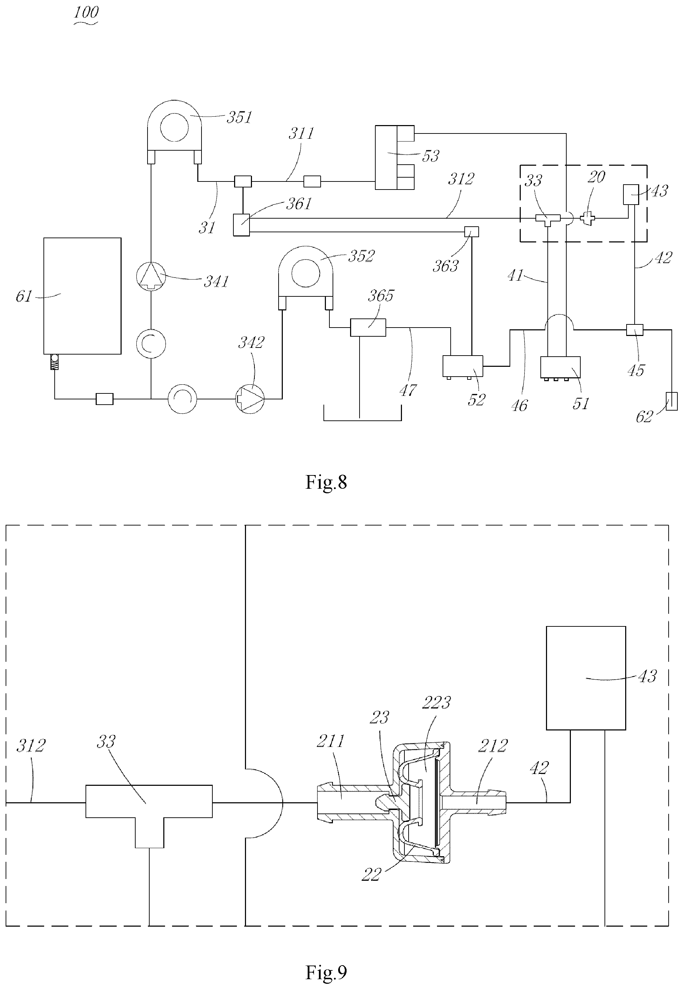

Referring to Fig. 8, the present application also includes a liquid supply path system 100 with the aforementioned on-off valve 20. The liquid supply path system 100 includes a pressurized liquid source, a liquid supply line 31, a first output line 41, and a second output line 42. The liquid supply line 31 is connected downstream of the pressurized liquid source; the first output line 41 is connected downstream of the liquid supply line 31. The first output line 41 is used to deliver liquid to a first outlet port 51; the second output line 42 is connected downstream of the liquid supply line 31 and delivers liquid to a second outlet port 52. A pump 43 is provided on the second output line 42, and the second output line 42 and first output line 41 have an output connection point, with the on-off valve 20 disposed between the output connection point and the second output line 42. The pump 43 is configured to generate a negative pressure in the buffer chamber 223 when activated, thereby forming the gap 25 between the sealing member 22 and buffer member 23, such that the liquid supply line 31 and second output line 42 communicate through the gap 25. The pump 43 is further configured such that, when deactivated, the buffer member 23 abuts against the sealing member 22 to block fluid communication between the liquid supply line 31 and second output line 42.

When the pump 43 is deactivated, the liquid supply line 31 can deliver liquid to the first output line 41 through the output connection point, and since the on-off valve 20 is closed, the liquid supply line 31 cannot deliver liquid to the second output line 42, thus avoiding liquid discharge at the second outlet port 52. When the pump 43 is activated, the on-off valve 20 opens under negative pressure, allowing the liquid supply line 31 to deliver liquid to the second output line 42 through the output connection point. The opening and closing of the on-off valve 20 requires no additional circuit control; it only needs to be connected in series with the second output line 42 to eliminate the effects of water hammer on the second output line 42 and downstream lines of the second output line 42, thereby preventing undesired liquid discharge at the second outlet port 52. Additionally, the small size of the on-off valve 20 does not increase the overall water path volume, facilitating miniaturization of machines using this liquid supply path system 100.

Referring to Fig. 9, the liquid inlet passage 211 connects to the output connection point, and the liquid outlet passage 212 connects to the second output line 42. The on-off valve 20 is connected in series between the output connection point and the second output line 42, with the pump 43 provided on the second output line 42. When the pump 43 activates, negative pressure is generated at the inlet side of the pump 43, and since the liquid outlet passage 212 is provided at the inlet side of the pump 43, negative pressure is generated in the buffer chamber 223.

The sealing member 22 has a connecting passage 222, and the buffer member 23 extends into the connecting passage 222. When the pump 43 is deactivated, the wall of the connecting passage 222 abuts against the buffer member 23, blocking fluid communication between the liquid inlet passage 211 and liquid outlet passage 212, thereby blocking fluid communication between the liquid supply line 31 and second output line 42. When the pump 43 activates, under negative pressure, the wall of the connecting passage 222 separates from the buffer member 23 to form the gap 25, allowing fluid communication between the liquid inlet passage 211 and liquid outlet passage 212 through the gap 25, thereby establishing fluid communication between the liquid supply line 31 and second output line 42. The on-off valve 20 upstream of the pump 43 can be reliably controlled based on whether the pump 43 is activating, without requiring any electrical connections to the on-off valve 20, simplifying the overall liquid path structure and reducing system cost.

For example, the liquid supply path system 100 can be a beverage machine's liquid supply path system 100, with the second outlet port 52 configured as an emulsification device. The liquid supply path system 100 also includes a milk supply connector 45 and milk line 46, with the second output line 42 and milk line 46 respectively connected upstream and downstream of the milk supply connector 45. The milk line 46 connects the milk supply connector 45 and second outlet port 52, and a milk source 62 communicates with the milk line 46 through the milk supply connector 45. The pump 43 can selectively suck liquid from the second output line 42 into the milk line 46, or suck air through the first outlet port 51 into the milk line 46. The output connection point is configured as a multi-way connector 33, with the liquid supply line 31, first output line 41, and second output line 42 respectively connected to the multi-way connector 33, and the on-off valve 20 disposed between the multi-way connector 33 and second output line 42. The milk source 62 can be a milk container, milk carton, or other container storing milk, and can be placed in a refrigerated environment, such as in a refrigeration device. A milk tube extending into the milk source 62 can connect to the milk supply connector 45 to deliver milk to the emulsification device.

For the above liquid supply path system 100, the pump 43 is connected between the liquid supply line 31 and milk supply connector 45. The pump 43 can selectively suck liquid sequentially from the liquid supply line 31, multi-way connector, on-off valve 20, second output line 42, milk supply connector 45, and milk line 46 into the emulsification device, enabling liquid cleaning of the milk line 46 and emulsification device.

In some embodiments, the pressurized liquid source includes a liquid source 61 and a first water pump 341 downstream of the liquid source 61. A first heater 351 is provided between the first water pump 341 and liquid supply line 31. The liquid supply line 31 includes a brewing water supply line 311 and a hot water supply line 312. The multi-way connector 33 is configured as a three-way connector, with the hot water supply line 312, first output line 41, and second output line 42 respectively connected to the three-way connector. The brewing water supply line 311 can supply hot water heated by the first heater 351 to the machine's brewer 53. The liquid source 61 can be an internal water tank of the beverage machine, external bottled water, or purified tap water. In some applications, the liquid source 61 can also be a cleaning liquid source. Providing hot water to both the first output line 41 and milk line 46 through the same heater makes the line arrangement more compact, reduces cost, and improves cleaning effectiveness with hot water.

The first heater 351 can supply hot water to both the brewing water supply line 311 and hot water supply line 312. When the first heater 351 is configured as an electric heating plate, to ensure the temperature of hot water supplied to both lines, the first water pump 341 operates in frequency-cutting mode to control flow rate reduction, thereby reducing water flow speed through the first heater 351. By adjusting the flow rate of the first water pump 341 through frequency cutting, the water flow speed through the first heater 351 is adjusted, allowing sufficient heating time and thus increasing the temperature of hot water output at the first outlet port 51. When the first water pump 341 operates in frequency-cutting mode, water hammer effects occur, which can affect the pump 43 to some extent, potentially causing dripping milk or water issues at the second outlet port 52 (configured as an emulsification device) during hot water dispensing. Providing the on-off valve 20 between the multi-way connector 33 and second output line 42 can prevent milk or water dripping from the emulsification device during hot water dispensing due to the frequency-cutting operation of the first water pump 341, thus maintaining the machine's beverage preparation experience. Additionally, the frequency-cutting operation of the first water pump 341 allows for a wide adjustable hot water temperature range of 60-85°C, meeting more customer needs.

Without the on-off valve 20, when dispensing hot water or making Americano (a mixture of espresso and hot water), most hot water from the hot water supply line 312 would flow out through the first output line 41 and first outlet port 51. Simultaneously, due to water hammer effects from the frequency-cutting control of the first water pump 341, the pump 43 would be affected, causing some hot water from the hot water supply line 312 to flow through the multi-way connector 33, on-off valve 20, pump 43, second output line 42, milk supply connector 45, milk line 46, and second outlet port 52. If milk or water remains in the milk line 46, it would be carried out together, resulting in milk or water dripping at the second outlet port 52, leading users to question the machine's performance and quality, degrading the beverage preparation experience.

With the on-off valve 20 as in the present application, when dispensing hot water or making Americano, due to the protection of the pump 43 by the on-off valve 20, as mentioned earlier, even water hammer effects cannot open the on-off valve 20. All hot water from the hot water supply line 312 can only flow through the first output line 41 and first outlet port 51, and will not flow through the on-off valve 20, pump 43, second output line 42, milk supply connector 45, milk line 46, and second outlet port 52, thus avoiding milk or water dripping at the second outlet port 52 during hot water dispensing or Americano preparation.

Furthermore, a first electromagnetic control valve 361 is provided on the hot water supply line 312, with an input port of the first electromagnetic control valve 361 connected downstream of the first heater 351 and two output ports of the first electromagnetic control valve 361 respectively connected to the multi-way connector 33 and the second outlet port 52. One output port of the first electromagnetic control valve 361 can connect to the air inlet of the second outlet port 52 (configured as an emulsification device). An air valve 363 can be provided between the first electromagnetic control valve 361 and the emulsification device. Opening the air valve 363 and the corresponding output port of the first electromagnetic control valve 361 enables cleaning of the air inlet of the emulsification device. During air inlet cleaning, the air valve 363 can be closed after the first electromagnetic control valve 361 to ensure complete steam evacuation. The first electromagnetic control valve 361 installation can control hot water delivery to either the first output line 41 or second output line 42, and also enable hot water delivery to the emulsification device, simplifying line arrangement.

In some embodiments, the pump 43 is configured as a diaphragm pump, which is compact and can suck both water and air. The diaphragm pump also has check valve functionality, preventing milk from the milk source 62 from entering the second output line 42 through the milk supply connector 45. The pump 43 can also be other types of vacuum pumps capable of generating negative pressure, such as peristaltic pumps or vane pumps, which can suck both air and liquid. The first outlet port 51 is configured as the beverage machine's beverage outlet assembly. A brewer 53 can be installed between the first heater 351 and the beverage outlet assembly, utilizing hot water from the first heater 351 for brewing beverages or cleaning the brewer 53.

The liquid supply path system 100 also includes a second heater 352 and a second water pump 342. The second heater 352 is connected downstream of the liquid source 61, with the second water pump 342 provided between the liquid source 61 and second heater 352. The liquid source 61 supplies liquid to the second heater 352 through the second water pump 342. A steam delivery line 47 connects between the second heater 352 and the emulsification device, with a steam valve 365 provided on the steam delivery line 47. The second heater 352 can provide steam or hot water to the emulsification device through the steam delivery line 47. Delivering steam or hot water through the second heater 352 to the emulsification device reduces the workload on the first heater 351. The liquid sources 61 for the first heater 351 and second heater 352 can be either independent or shared. Each heater can maintain a respective temperature based on different fluid supply requirements, facilitating heater control.

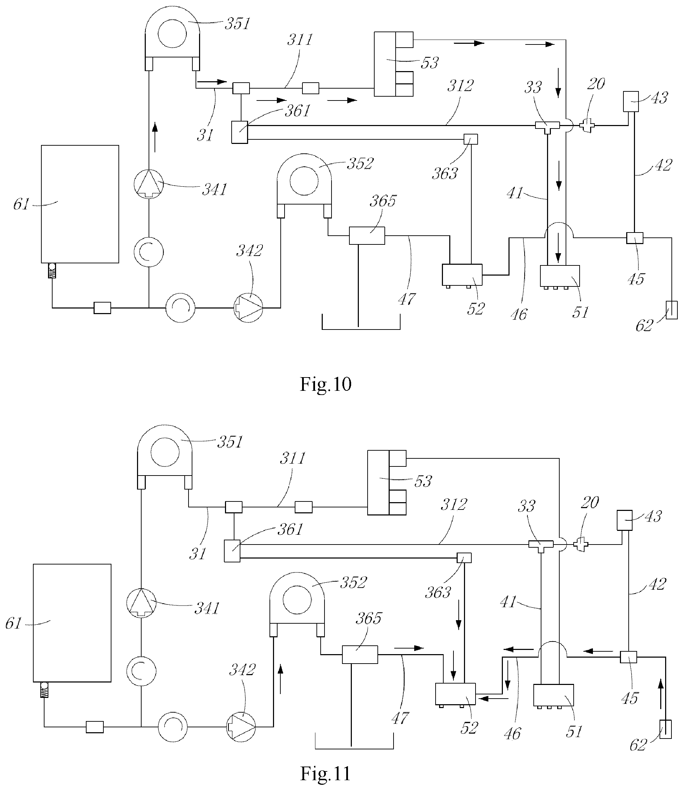

Taking a coffee machine as an example, referring to Fig. 10, in the first liquid path mode, such as making Americano, the on-off valve 20 operates as follows: the pump 43 is deactivated, and hot water is supplied simultaneously or successively to the brewing water supply line 311 and hot water supply line 312. For example, the first water pump 341 supplies water to the first heater 351 under frequency-cutting control. Water heated by the first heater 351 is delivered through the brewing water supply line 311 to the brewer 53, and the brewed beverage is delivered from the beverage delivery line downstream of the brewer 53 to the first outlet port 51. Hot water from the hot water supply line 312 enters the liquid inlet passage 211, the buffer member 23 maintains abutment against the sealing member 22, fluid communication between the liquid inlet passage 211 and liquid outlet passage 212 is blocked, and hot water from the hot water supply line 312 enters the first outlet port 51 through the first output line 41. The liquid delivery direction follows the arrows shown in Fig. 10. When making Americano, since the pump 43 is deactivated and the on-off valve 20 is closed, hot water from the hot water supply line 312 can only flow through the first output line 41 and first outlet port 51, and cannot flow through the on-off valve 20, pump 43, second output line 42, milk supply connector 45, milk line 46, and second outlet port 52.

Referring to Fig. 11, in the second liquid path mode, such as making milk foam, the on-off valve 20 operates as follows: the pump 43 is deactivated, and steam is supplied to the emulsification device. Under the Venturi effect of the emulsification device, liquid (e.g., milk) is sucked sequentially from the milk source 62, milk supply connector 45, and milk line 46 to the emulsification device. Simultaneously, external air is delivered to the emulsification device through the air valve 363 under the Venturi effect. Steam, milk, and air mix in the emulsification device to form and output milk foam. The first water pump 341 is deactivated, while the second water pump 342 activates to supply water to the second heater 352. Steam generated by the second heater 352 is delivered to the emulsification device through the steam delivery line 47. The buffer member 23 of the on-off valve 20 maintains abutment against the sealing member 22, blocking fluid communication between the liquid inlet passage 211 and liquid outlet passage 212. The steam, milk, and air flow directions follow the arrows shown in Fig. 11. During milk foaming, since the pump 43 is deactivated and the on-off valve 20 is closed, liquid cannot be sucked into the second output line 42 through the on-off valve 20.

A check valve is provided in the milk supply connector 45, allowing one-way flow from the milk source 62 to the milk line 46. When making hot milk/milk foam, negative pressure generated by the emulsification device based on the Venturi effect, combined with the check valve functionality of the pump 43, allows milk to be sucked through the check valve into the emulsification device for hot milk/milk foam preparation.

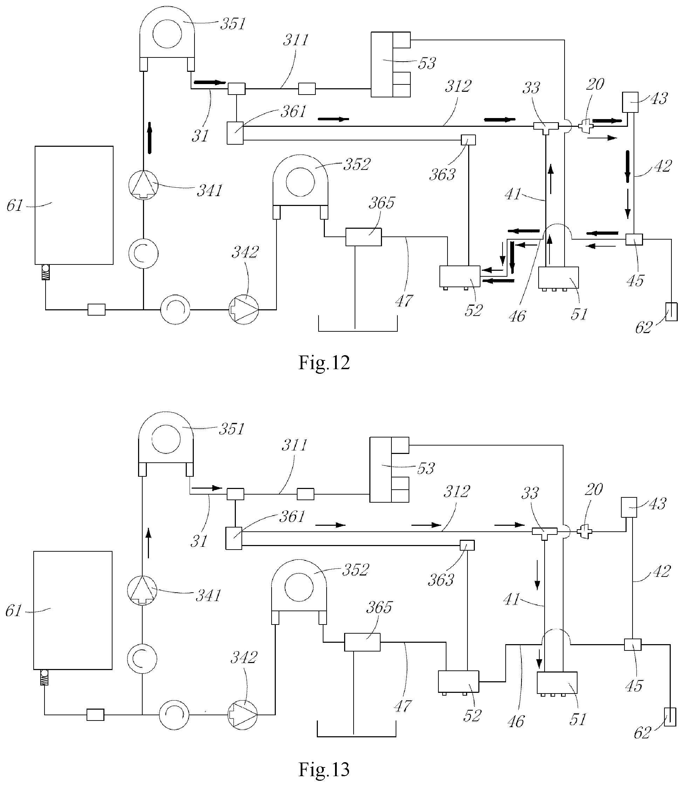

Referring to Fig. 12, after completing hot milk/milk foam preparation, if no beverage is made for a period, the beverage machine automatically initiates the cleaning program. In the third liquid path mode, such as during hot water cleaning, the on-off valve 20 operates as follows: the pump 43 activates, and hot water is supplied through the hot water supply line 312. For example, the first water pump 341 can be activated to supply water to the first heater 351, and heated water is delivered through the hot water supply line 312 to the three-way connector. Under the action of the negative pressure of the pump 43, the on-off valve 20 connects, and hot water flows sequentially through the on-off valve 20, pump 43, second output line 42, milk supply connector 45, milk line 46, and second outlet port 52, completing hot water cleaning of the milk line 46 and emulsification device. Hot water from the hot water supply line 312 enters the liquid inlet passage 211, and under the action of the negative pressure generated by the pump 43 in the buffer chamber 223, a gap 25 forms between the sealing member 22 and buffer member 23, allowing fluid communication between the liquid inlet passage 211 and liquid outlet passage 212. Hot water flowing out of the liquid outlet passage 212 is delivered to the emulsification device through the second output line 42 and milk line 46. Hot water flow direction follows the thick arrows shown in Fig. 12. During hot water cleaning, the pump 43 is activated and the on-off valve 20 is connected.

After hot water cleaning, in the fourth liquid path mode, such as during air cleaning, the pump 43 activates, and under the action of the negative pressure generated by the pump 43 in the buffer chamber 223, the gap 25 forms between the sealing member 22 and buffer member 23, allowing fluid communication between the liquid inlet passage 211 and liquid outlet passage 212. External air is delivered from the first outlet port 51 through the first output line 41, three-way connector, on-off valve 20, second output line 42, and milk line 46 to the emulsification device. For example, the output port of the first electromagnetic control valve 361 leading to the hot water delivery line 312 is closed. At this time, the pump 43 sucks air from the first outlet port 51, which enters the first output line 41, then passes through the multi-way connector 33 into the second output line 42, and finally enters the milk line 46 and exits through the emulsification device, achieving removal of residual hot water from the cleaned emulsification device lines. The air suction and residual water discharge path follows the thin arrows shown in Fig. 12, with residual hot water discharged through the emulsification device's foam outlet into the drip tray. This not only completes milk line 46 cleaning but also ensures no residual hot water remains in the lines, preventing mixing of residual cleaning hot water with newly made milk foam during the next foaming operation, which would affect the taste of fresh milk foam/milk coffee.

Referring to Fig. 13, in the fifth liquid path mode, such as dispensing hot water, the on-off valve 20 operates as follows: the pump 43 is deactivated, the first water pump 341 starts to supply hot water to the hot water supply line 312. Hot water from the hot water supply line 312 enters the liquid inlet passage 211, the buffer member 23 maintains abutment against the sealing member 22, blocking fluid communication between the liquid inlet passage 211 and liquid outlet passage 212, and hot water from the hot water supply line 312 enters the first outlet port 51 through the first output line 41. The first water pump 341 can be frequency-controlled to supply water to the first heater 351, and heated water is delivered through the hot water supply line 312 to the multi-way connector 33. Since the pump 43 is deactivated, the on-off valve 20 is closed, and hot water can only be delivered to the first outlet port 51 through the first output line 41, completing hot water output. Hot water flow direction follows the arrows shown in Fig. 13. Due to the on-off valve 20 being provided between the multi-way connector 33 and second output line 42, hot water at the multi-way connector 33 can only flow out through the first outlet port 51 in the direction of the arrows, and cannot flow through the on-off valve 20, pump 43, second output line 42, milk supply connector 45, milk line 46, and second outlet port 52, thus preventing residual milk or water in the milk line 46 from being discharged through the emulsification device into the cup.

The pump 43 only activates during path cleaning, specifically during hot water cleaning and air cleaning, and remains deactivated at other times. This ensures that the on-off valve 20 only opens during path cleaning, while remaining closed when the first water pump 341 operates under frequency control, avoiding situations where water hammer effects might cause the pump 43 to open slightly, allowing small amounts of water to enter the emulsification device through the second output line 42 and milk line 46 and be discharged into the cup, or residual milk in the milk line 46 dripping into the cup.

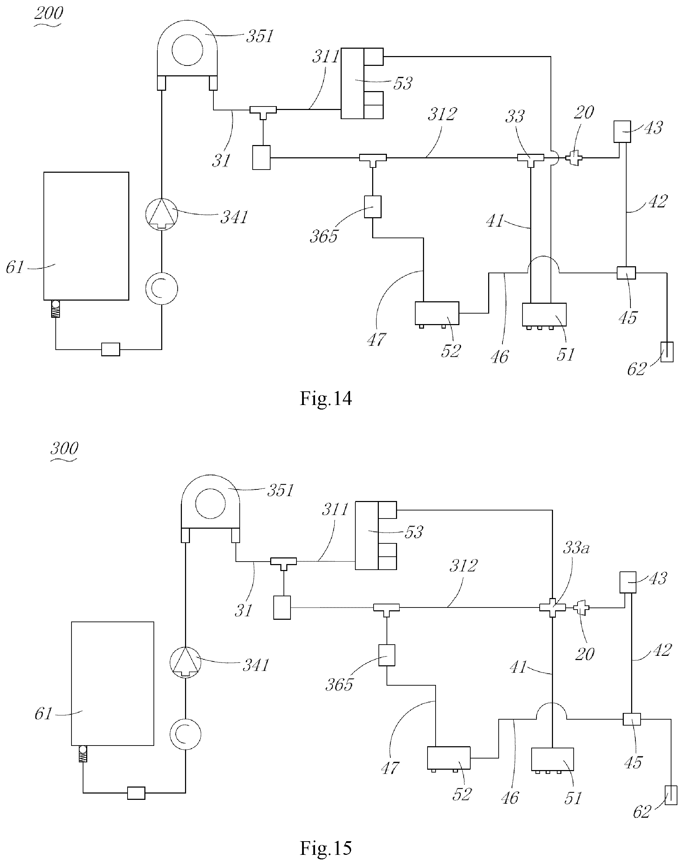

Referring to Fig. 14, in another embodiment of the liquid supply path system 200, the liquid supply path system includes a pressurized liquid source, liquid supply line 31, first output line 41, and second output line 42. The liquid supply line 31 is connected downstream of the pressurized liquid source; the first output line 41 is connected downstream of the liquid supply line 31 for delivering liquid to the first outlet port 51; the second output line 42 is connected downstream of the liquid supply line 31 for delivering liquid to the second outlet port 52. The pump 43 is provided on the second output line 42, and the second output line 42 and first output line 41 have an output connection point, with the on-off valve 20 provided between the output connection point and second output line 42. When the pump 43 activates, it generates negative pressure in the buffer chamber 223 to form a gap 25 between the sealing member 22 and buffer member 23, thereby allowing communication between the liquid supply line 31 and second output line 42 through the gap 25. When the pump 43 is deactivated, the buffer member 23 abuts against the sealing member 22, blocking fluid communication between the liquid supply line 31 and second output line 42.

When the pump 43 is deactivated, the liquid supply line 31 can deliver liquid to the first output line 41 through the output connection point, and because the on-off valve 20 is closed, the liquid supply line 31 cannot deliver liquid to the second output line 42, thus avoiding liquid discharge at the second outlet port 52. When the pump 43 is activated, the on-off valve 20 connects under negative pressure, allowing the liquid supply line 31 to deliver liquid to the second output line 42 through the output connection point. The connection and disconnection of the on-off valve 20 require no additional circuit control, only needing to be connected in series upstream of the second output line 42 to eliminate the effects of water hammer on the second output line 42. Additionally, the small size of the on-off valve 20 does not increase the overall water path volume, allowing for a compact machine design.

For example, the liquid supply path system 200 can be a liquid supply path system of a beverage machine, with the second outlet port 52 configured as an emulsification device. The liquid supply path system also includes a milk supply connector 45 and milk line 46, with the second output line 42 and milk line 46 respectively connected upstream and downstream of the milk supply connector 45. The milk line 46 connects the milk supply connector 45 and second outlet port 52, and the milk source 62 communicates with the milk line 46 through the milk supply connector 45. The pump 43 can selectively suck liquid from the second output line 42 into the milk line 46, or suck air through the first outlet port 51 into the milk line 46. The output connection point is constructed as a multi-way connector 33, with the liquid supply line 31, first output line 41, and second output line 42 respectively connected to the multi-way connector 33, and the on-off valve 20 provided between the multi-way connector 33 and second output line 42.

The above-mentioned liquid supply path system 200 has the same specific connections for the on-off valve 20 as in system 100, so these details won't be repeated here.

The pressurized liquid source includes a liquid source 61 and a first water pump 341 downstream of it. A first heater 351 is installed between the first water pump 341 and liquid supply line 31. The liquid supply line 31 includes a brewing water supply line 311 and hot water supply line 312. The multi-way connector 33 is configured as a three-way connector, with the hot water supply line 312, first output line 41, and second output line 42 respectively connected to the three-way connector. Using the first heater 351 to provide hot water to both the first output line 41 and milk line 46 improves cleaning effectiveness.

A steam supply line 47 with a steam valve 365 connects between the hot water supply line 312 and the emulsification device, allowing the first heater 351 to also provide steam to the emulsification device.

The first heater 351 can provide both hot water to the first output line 41 and milk line 46, and steam to the emulsification device, making the line arrangement more compact and cost-effective, particularly suitable for compact beverage machines.

Referring to Fig. 15, in another embodiment of liquid supply path system 300, the pressurized liquid source includes a liquid source 61 and a first water pump 341 downstream of it. A first heater 351 is provided between the first water pump 341 and liquid supply line 31. The liquid supply line 31 includes a brewing water supply line 311 and hot water supply line 312. The difference from previous embodiments is that the multi-way connector 33a is configured as a four-way connector, with the first output line 41, brewing water supply line 311, hot water supply line 312, and second output line 42 respectively connected to the four-way connector. The on-off valve 20 is provided between the four-way connector and second output line 42, preventing undesired liquid delivery in the second output line 42.

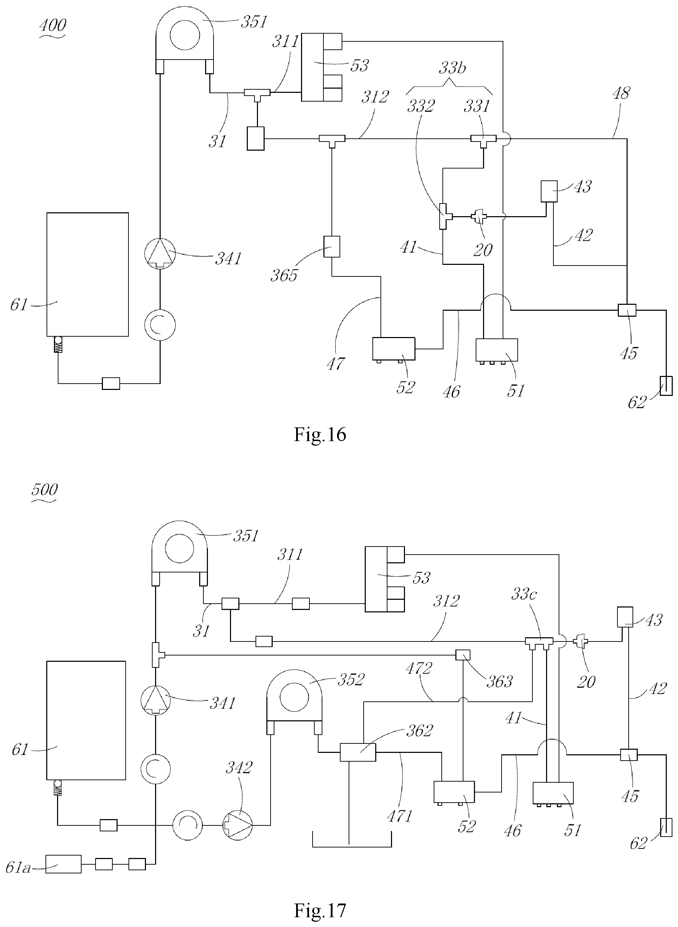

Referring to Fig. 16, in another embodiment of liquid supply path system 400, the liquid supply path system includes a third output line 48 connected to the milk supply connector 45. The multi-way connector 33b includes a first three-way connector 331 and a second three-way connector 332. The hot water supply line 312, first output line 41, and third output line 48 are connected to the first three-way connector 331. The second three-way connector 332 is connected to the first output line 41, with the second output line 42 connected between the second three-way connector 332 and third output line 48, and the on-off valve 20 connected between the second three-way connector 332 and second output line 42. The parallel arrangement of the second output line 42 and third output line 48 between the liquid supply line 31 and milk supply connector 45 provides more output options for the emulsification device.

Referring to Fig. 17, in another embodiment of liquid supply path system 500, the pressurized liquid source includes a first water pump 341 downstream of the liquid source 61. A second water pump 342 is further provided downstream of the liquid source 61. A first heater 351 is provided between the first water pump 341 and liquid supply line 31. A second heater 352 is provided between the second water pump 342 and second outlet port 52, with a second electromagnetic control valve 362 between the second heater 352 and second outlet port 52. The second electromagnetic control valve 362 connects to a main delivery line 471 and auxiliary delivery line 472. The main delivery line 471 connects to the second outlet port 52. The multi-way connector 33c is configured as a four-way connector, with the hot water supply line 312, first output line 41, second output line 42, and auxiliary delivery line 472 respectively connected to the four-way connector. The on-off valve 20 is provided between the four-way connector and second output line 42 to prevent undesired liquid delivery to the second output line 42.

In this embodiment, the liquid source 61a for the first water pump 341 can be tap water, while the liquid source 61 for the second water pump 342 can be a water tank. The air valve 363 can connect upstream of the first heater 351, enabling cold water cleaning of the emulsification device. The auxiliary delivery line 472 can deliver water heated by the second heater 352 to the beverage outlet assembly, reducing the workload on the first heater 351 while providing more output options for the beverage outlet assembly.

In this embodiment, during automatic cleaning, either the first water pump 341 or second water pump 342 can suck water, directly cleaning the emulsification device body through the four-way connector and second output line 42. When the pump 43 is activated, the on-off valve 20 connects under the action of the negative pressure of the pump 43, allowing water to flow into the second output line 42 and clean the milk line 46. Then, when the first water pump 341 or second water pump 342 stops sucking water, the pump 43 remains activated, sucking air through the first output line 41 to evacuate residual water from the milk line 46.

The configuration of the above liquid supply path systems, by providing the on-off valve 20, the flow rate of the first water pump 341 can be adjusted at a cut-off frequency, thereby adjusting the temperature of the outlet hot water without concern for the effects of water hammer on the path caused by the frequency control of the first water pump 341. The liquid supply path system can achieve both automatic cleaning of the emulsification device and adjustable hot water temperature, greatly improving cleaning convenience while allowing beverage temperature customization according to individual preferences, enhancing beverage quality and providing users with more and better experiences.

It should be understood that although this specification describes various embodiments, not every embodiment contains only one independent technical solution. This method of description is merely for clarity, and those skilled in the art should consider the specification as a whole. The technical solutions in various embodiments can be appropriately combined to form other embodiments understandable to those skilled in the art.

The series of detailed descriptions listed above are merely specific explanations of feasible implementations of the present application and are not intended to limit its scope of protection. Any equivalent implementations or modifications made without departing from the technical spirit of this application should be included within its scope of protection.

## Claims

1. An on-off valve (20), comprising:
a valve housing (21) defining a receiving cavity (213), the valve housing (21) having a liquid inlet passage (211) and a liquid outlet passage (212), wherein both the liquid inlet passage (211) and the liquid outlet passage (212) communicate with the receiving cavity (213); and
a sealing member (22) provided in the receiving cavity (213), wherein a buffer chamber (223) is formed between the sealing member (22) and the liquid outlet passage (212);
**characterized in that**, further comprising
a buffer member (23) provided between the liquid inlet passage (211) and the sealing member (22); wherein in an initial state, the buffer member (23) abuts against the sealing member (22) to block communication between the liquid inlet passage (211) and the liquid outlet passage (212); under action of negative pressure in the buffer chamber (223), a gap (25) is formed between the sealing member (22) and the buffer member (23), and the liquid inlet passage (211) and the liquid outlet passage (212) communicate through the gap (25).

2. The on-off valve (20) according to claim 1, wherein the sealing member (22) is configured to undergo self-deformation under the action of the negative pressure to form the gap (25) between the sealing member (22) and the buffer member (23).

3. The on-off valve (20) according to claim 1, wherein the sealing member (22) is configured such that, under the action of the negative pressure in the buffer chamber (223), at least a portion of the sealing member (22) is displaced toward the liquid outlet passage (212).

4. The on-off valve (20) according to claim 2 or 3, wherein at least a portion of the buffer member (23) is disposed in the receiving cavity (213), the sealing member (22) has a connecting passage (222), and the buffer member (23) extends into the connecting passage (222); wherein a wall of the connecting passage (222) abuts against the buffer member (23), or the gap (25) is formed between the wall of the connecting passage (222) and the buffer member (23).

5. The on-off valve (20) according to claim 4, wherein along a fluid flow direction from the liquid inlet passage (211) to the liquid outlet passage (212), the buffer member (23) is movably connected to the valve housing (21); and/or along a fluid flow direction from the liquid inlet passage (211) to the liquid outlet passage (212), the connecting passage (222) is configured tapered.

6. The on-off valve (20) according to claim 4, wherein a first limiting portion (215) is provided in the liquid inlet passage (211), the buffer member (23) includes a second limiting portion (231) and a passage blocking portion (233), the second limiting portion (231) extends into the liquid inlet passage (211), and the passage blocking portion (233) is located in the receiving cavity (213); in the fluid flow direction, the buffer member (23) is configured to move relative to the valve housing (21) until the passage blocking portion (233) abuts against the sealing member (22), or until the second limiting portion (231) abuts against the first limiting portion (215).

7. The on-off valve (20) according to claim 4, wherein the valve housing (21) includes a first wall (261) adjacent to the liquid inlet passage (211), the first wall (261) is configured to define the receiving cavity (213) and positionally constrain the sealing member (22), the sealing member (22) includes a bending portion (224), the bending portion (224) extends bendingly from the first wall (261) toward the liquid outlet passage (212), and the bending portion (224) surrounds to form the connecting passage (222).

8. The on-off valve (20) according to claim 7, wherein the valve housing (21) includes a second wall (262) adjacent to the liquid outlet passage (212), the second wall (262) is configured to define the receiving cavity (213) and positionally constrain the sealing member (22), the sealing member (22) includes a surrounding wall portion (225), the surrounding wall portion (225) is disposed around the liquid outlet passage (212) and contacts against the second wall (262), and the surrounding wall portion (225) is integrally formed with the bending portion (224).

9. The on-off valve (20) according to claim 4, wherein the negative pressure on the sealing member (22) is the same as a fluid outflow direction of the liquid outlet passage (212), and the liquid inlet passage (211), the connecting passage (222) and the liquid outlet passage (212) are coaxially arranged.

10. The on-off valve (20) according to claim 4, wherein the sealing member (22) is configured to have at least one of the following structures:
a first bent edge (227) is provided at an end of the wall of the connecting passage (222) toward the liquid outlet passage (212), and the first bent edge (227) protrudes in a direction away from the connecting passage (222);
the valve housing (21) includes a second wall (262) adjacent to the liquid outlet passage (212), the second wall (262) is configured to define the receiving cavity (213) and positionally constrain the sealing member (22), a second bent edge (228) is provided at an end of the sealing member (22) that engages with the second wall (262), and the second bent edge (228) protrudes in a direction away from the connecting passage (222);
at least one notch (229) is provided on the wall of the connecting passage (222), and an opening direction of the notch (229) is set to face the liquid outlet passage (212).

11. The on-off valve (20) according to claim 1, wherein the valve housing (21) includes a first wall (261), a second wall (262) and a side wall (263) that together define the receiving cavity (213), the side wall (263) connecting the first wall (261) and the second wall (262), the first wall (261) is adjacent to the liquid inlet passage (211), and the second wall (262) is adjacent to the liquid outlet passage (212); a limiting protrusion ring (266) is provided on the second wall (262), the sealing member (22) includes an edge (226) abutting against the second wall (262), and the edge (226) is limited between the side wall (263) and the limiting protrusion ring (266); and/or wherein the valve housing (21) includes a first wall (261), a second wall (262) and a side wall (263) that together define the receiving cavity (213), the side wall (263) connecting the first wall (261) and the second wall (262), a water receiving chamber (216) is formed among the sealing member (22), the side wall (263), and the first wall (261), the sealing member (22) abuts against the first wall (261) to block communication between the water receiving chamber (216) and the liquid inlet passage (211); under the condition that the gap (25) is formed between the sealing member (22) and the buffer member (23), the sealing member (22) separates from the first wall (261) to communicate the water receiving chamber (216) with the liquid inlet passage (211).

12. A liquid supply path system (100, 200, 300, 400, 500), comprising:
a pressurized liquid source;
a liquid supply line (31) connected downstream of the pressurized liquid source;
a first output line (41) connected downstream of the liquid supply line (31) for delivering liquid to a first outlet port (51);
a second output line (42) connected downstream of the liquid supply line (31) for delivering liquid to a second outlet port (52), wherein a pump (43) is provided on the second output line (42);
**characterized in that**, the liquid supply path system further comprises the on-off valve (20) according to any one of claims 1 to 11, the second output line (42) and the first output line (41) have an output connection point, and the on-off valve (20) is provided between the output connection point and the second output line (42);
the pump (43) is configured to generate a negative pressure in the buffer chamber (223) when activated, thereby forming the gap (25) between the sealing member (22) and the buffer member (23) such that the liquid supply line (31) and the second output line (42) communicate through the gap (25); the pump (43) is further configured such that, when deactivated, the buffer member (23) abuts against the sealing member (22) to block communication between the liquid supply line (31) and the second output line (42).

13. The liquid supply path system (100, 200, 300, 400, 500) according to claim 12, wherein the liquid inlet passage (211) connects to the output connection point, and the liquid outlet passage (212) connects to the second output line (42); preferably wherein the sealing member (22) has a connecting passage (222), and the buffer member (23) extends into the connecting passage (222); when the pump (43) is deactivated, the on-off valve (20) maintains the initial state with a wall of the connecting passage (222) abutting against the buffer member (23); when the pump (43) is activated, under the negative pressure the wall of the connecting passage (222) separates from the buffer member (23) to form the gap (25).

14. The liquid supply path system (100, 200, 300, 400, 500) according to claim 12, further comprising a milk supply connector (45) and a milk line (46) provided downstream of the second output line (42), wherein the milk line (46) connects the milk supply connector (45) and the second outlet port (52), the second outlet port (52) is configured as an emulsification device, and a milk source (62) communicates with the milk line (46) through the milk supply connector (45);
wherein the pump (43) is selectively operable to suck liquid from the second output line (42) into the milk line (46), or suck air into the milk line (46) through the first outlet port (51), the first output line (41) and the second output line (42); the output connection point is configured as a multi-way connector (33, 33a, 33b, 33c), the liquid supply line (31), the first output line (41) and the second output line (42) are respectively connected to the multi-way connector (33, 33a, 33b, 33c), and the on-off valve (20) is disposed between the multi-way connector (33, 33a, 33b, 33c) and the second output line (42).

15. The liquid supply path system (100, 200, 300, 400, 500) according to claim 14, wherein the liquid supply line (31) comprises a brewing water supply line (311) and a hot water supply line (312), the hot water supply line (312) communicates with the multi-way connector (33, 33a, 33b, 33c), and the on-off valve (20) is configured to achieve at least one of the following liquid path modes:
in a first liquid path mode, the pump (43) is deactivated, hot water is supplied to the brewing water supply line (311) and the hot water supply line (312) simultaneously or successively, the hot water in the hot water supply line (312) enters the liquid inlet passage (211), the buffer member (23) maintains abutment against the sealing member (22), fluid communication between the liquid inlet passage (211) and the liquid outlet passage (212) is blocked, and the hot water in the hot water supply line (312) enters the first outlet port (51) through the first output line (41);
in a second liquid path mode, the pump (43) is deactivated, steam is supplied to the emulsification device, the emulsification device sucks liquid from the milk source (62), the milk supply connector (45) and the milk line (46) sequentially based on the Venturi effect, and the buffer member (23) maintains abutment against the sealing member (22), fluid communication between the liquid inlet passage (211) and the liquid outlet passage (212) is blocked;
in a third liquid path mode, hot water is supplied to the hot water supply line (312), the hot water in the hot water supply line (312) enters the liquid inlet passage (211), the pump (43) is activated to generate the negative pressure in the buffer chamber (223), the gap (25) is formed between the sealing member (22) and the buffer member (23) under the action of the negative pressure, fluid communication is established between the liquid inlet passage (211) and the liquid outlet passage (212), and the hot water flowing out of the liquid outlet passage (212) is delivered to the emulsification device through the second output line (42) and the milk line (46);
in a fourth liquid path mode, the pump (43) is activated to generate the negative pressure in the buffer chamber (223), the gap (25) is formed between the sealing member (22) and the buffer member (23) under the action of the negative pressure, fluid communication is established between the liquid inlet passage (211) and the liquid outlet passage (212), and external air is delivered to the emulsification device through the first outlet port (51), the first output line (41), the second output line (42) and the milk line (46);
in a fifth liquid path mode, the pump (43) is deactivated, hot water is supplied to the hot water supply line (312), the hot water in the hot water supply line (312) enters the liquid inlet passage (211), the buffer member (23) maintains abutment against the sealing member (22), fluid communication between the liquid inlet passage (211) and the liquid outlet passage (212) is blocked, and the hot water in the hot water supply line (312) enters the first outlet port (51) through the first output line (41).
